Europäisches Patentamt

European Patent Office

Office européen des brevets

(11) Veröffentlichungsnummer: **0 032 720**
**B1**

(19)

(12) **EUROPÄISCHE PATENTSCHRIFT**

(45) Veröffentlichungstag der Patentschrift:
**03.07.85**

(21) Anmeldenummer: **81100228.6**

(22) Anmeldetag: **14.01.81**

(51) Int. Cl.⁴: **C 08 J 9/32,** C 08 J 9/22,
C 08 L 33/12 // E04C2/54

(54) Verfahren zum Herstellen von transparenten Schaumkunststoffen.

(30) Priorität: **15.01.80 DE 3001205**

(43) Veröffentlichungstag der Anmeldung:
**29.07.81 Patentblatt 81/30**

(45) Bekanntmachung des Hinweises auf die Patenterteilung:
**03.07.85 Patentblatt 85/27**

(84) Benannte Vertragsstaaten:
**AT BE CH FR GB IT LI LU NL SE**

(56) Entgegenhaltungen:
**DE - A - 1 629 381**
**DE - U - 1 952 960**
**FR - A - 915 134**
**FR - A - 2 133 599**
**GB - A - 1 448 621**
**US - A - 3 488 714**

(73) Patentinhaber: **Firma August Hohnholz, An der Alsterschleife 17, D-2000 Hamburg 65 (DE)**

(72) Erfinder: **Melchior, Bernd, Burger Strasse 255, D-5630 Remscheid (DE)**

(74) Vertreter: **May, Hans Ulrich, Thierschstrasse 27, D-8000 München 22 (DE)**

## Beschreibung

Technisches Gebiet

Die Erfindung betrifft Verfahren zum Herstellen von transparenten Schaumkunststoffen, besonders Polymethacrylatschaumstoffen, welche besonders die Form von Bahnen, Platten, Formkörpern und Mehrschichtkörpern mit Schaumstoffkern haben können.

Stand der Technik

Es ist bekannt, aus Kunststoff, z.B. Polyurethan, Schaumstoffe herzustellen. Grundsätzlich stehen dafür zwei Verfahren zur Verfügung. Beim ersten Verfahren wird das Ausgangsgemisch von Monomeren und Treibmittel unter gleichzeitigem Verschäumen in einem Einstufen-Verfahren polymerisiert. Nach diesem Verfahren lassen sich brauchbare Produkte nur erhalten, wenn die Monomeren rasch polymerisieren und damit ein mechanisch festes Produkt bilden, das durch die Gase oder Dämpfe des Treibmittels unter Bildung beständiger Zellen geschäumt werden kann.

Beim zweiten bekannten Verfahren wird zunächst das monomere Ausgangsmaterial mit dem zugesetzten Treibmittel ohne Verschäumen polymerisiert, worauf dann in einer zweiten Stufe das Polymerisat durch Erwärmen in einen plastischen oder fliessfähigen Zustand gebracht und gleichzeitig das Treibmittel verdampft oder zersetzt wird, so dass im Kunststoff Gasblasen entstehen und ein Schaumstoff gebildet wird.

Keines dieser bekannten Verfahren führt bei Polymethacrylaten zum gewünschten Erfolg. Beim ersten Verfahren können während der Polymerisation des Acrylschaums die Bläschen (Zellen) nicht stabil gehalten werden. Durch die Polymerisation wächst die Oberflächenspannung der Bläschen, so dass diese platzen und sich vereinigen und damit der Schaum vor dem Aushärten zusammenbricht.

Das bekannte Zweistufen-Verfahren führt für Polymethacrylate ebenfalls nicht zum gewünschten Erfolg. Nach GB-PS 1 448 621 und FR-PS 1 423 844 soll ein Polymethacrylat verschäumt werden, indem zunächst ein Methacrylsäureester mit Treibmittelzusatz unter Bedingungen, dass das Treibmittel noch nicht wirksam werden kann, polymerisiert wird. In einer zweiten Stufe wird dann das erhärtete Polymethacrylat auf eine Erweichungstemperatur erwärmt, bei der das Treibmittel aktiv wird. Wegen des hohen Innendrucks enthält der Schaumstoff jedoch im wesentlichen nur kleine Bläschen. Versuche zeigen ferner, dass die Polymethacrylatmasse beim Schäumen nach allen Richtungen zu einem Schaum auseinandergetrieben wird, dessen Oberfläche wellig und verworfen ist. Ausserdem lassen sich nach diesem Verfahren keine Schaumstoffprodukte mit durchgehender glatter und porenfreier Oberfläche erhalten. Die erhaltenen Produkte weisen ausserdem eine geringe Transparenz, d.h. Durchsichtigkeit auf und lassen Licht nur diffus hindurchtreten, da das Licht an den zahlreichen kleinen Bläschen reflektiert wird.

Aus FR-A-2 133 599 ist ein Verfahren zur Herstellung von Schaumkunststoffen aus einem wärmehärtbaren Kunststoff und einem gekörnten thermoplastischen Kunststoff bekannt, bei dem die Körner des thermoplastischen Kunststoffs schäumbar sind, eine scheinbare Dichte zwischen 1,0 und 0,5 g/cm³ aufweisen und nach Mischen mit dem wärmehärtbaren Kunststoff durch die bei dessen Reaktion frei werdende Wärme geschäumt werden. Man muss also als wärmehärtbare Kunststoffe solche verwenden, die bei der Härtung eine zum Schäumen des Granulats ausreichende Wärmemenge freisetzen, wie Polyesterurethane, Phenol-Formaldehydharze oder Epoxidharze. Als thermoplastischer Kunststoff soll schäumbares Granulat aus Polystyrol, Polyvinylchlorid oder Polyethylen mit einer scheinbaren Dichte von 1,0 bis 0,5 g/cm³ verwendet werden. Nur durch gleichmässige Benetzung des Granulats durch den flüssigen wärmehärtbaren Kunststoff wird bei dessen Reaktion eine gleichmässige Erwärmung der Granulatkörner und so schliesslich durch gleichzeitiges Schäumen derselben und Bildung einer Schaumstruktur des wärmehärtbaren Kunststoffs der gewünschte verstärkte homogene Schaumkunststoff erhalten.

Dieses Verfahren ist aber nicht zur Herstellung eines transparenten Polymethacrylat-Schaumkunststoffs geeignet, denn Methacrylsäureester oder Polyester setzen beim Härten nicht die zum Schäumen des Granulats ausreichende Wärmemenge frei.

DE-U-1 952 960 beschreibt eine Oberlichtkuppel aus Acryl-Schaumstoff mit glatter Aussen- und Innenfläche und solcher Schaumporengrösse, dass der Lichtdurchlass nur wenig vermindert wird. Es fehlen aber Angaben über die mechanische Festigkeit, die erforderliche Schaumporengrösse und vor allem jede Angabe, wie das Produkt herstellbar ist.

Es besteht nun ein Bedarf nach einem klar transparenten Schaumkunststoff, der eine hohe Lichtdurchlässigkeit bei gleichzeitiger guter mechanischer Festigkeit und hoher Wärmedämmung sowie glatter Oberflächenstruktur aufweist. Ein solcher Schaumkunststoff kann nach keinem der bisher bekannten Verfahren hergestellt werden und ist auch seiner Art nach grundsätzlich verschieden von bekannten lichtdurchlässigen extrudierten Schichtplatten aus Kunststoff, die im Inneren Stege oder dicht beieinanderliegende Röhrchen aufweisen.

Darstellung der Erfindung

Aufgabe der Erfindung ist es, ein Verfahren zur Herstellung eines transparenten Schaumkunststoffs anzugeben, das einen solchen Schaumkunststoff mit geschlossenen grossen flächigen Zellen mit regelbarer Zellengrösse, Zellenform und Zellendichte, regelbarer mechanischer Festigkeit und glatter porenfreier Oberfläche liefert und auch die Herstellung von Formkörpern und Mehrschichtenkörpern ermöglicht.

Diese Aufgabe wird gelöst durch das erfindungsgemässe Verfahren zum Herstellen eines transparenten Schaumkunststoffes, bei dem in ein Reaktionsharz, bestehend aus einem Methacrylsäureester oder einem Polyester, das die zum Aushärten erforderlichen Komponenten enthält, a) massive Perlen bestehend aus mindestens einem Polymethacrylat und Treibmittel und/oder b) massive Perlen aus mindestens einem Polymethacrylat mit eingeschlossenen, Treibmittel enthaltenden Mikrokapseln aus transparentem Polymer eingebracht werden, wobei ein Treibmittel verwendet wird, welches das Aufblähen der massiven Perlen bei einer Temperatur bewirkt, die niedriger als die zum Aushärten des Reaktionsharzes erforderliche Temperatur ist, die Perlen durch Erwärmen aufgebläht werden und anschliessend das Reaktionsharz ausgehärtet wird.

Die beim erfindungsgemässen Verfahren eingesetzten massiven Perlen bestehend aus einem Polymethacrylat und Treibmittel können auch in Form von Granulat vorliegen und in an sich bekannter Weise aus einem festen Material hergestellt werden, welches aus Polymethacrylat und dem im Material eingeschlossenen festen, flüssigen oder gasförmigen Treibmittel besteht, welches erst bei Erwärmung oder Erweichung des Materials wirksam wird, um die massiven Perlen zu schäumen. Zusammen mit oder statt solcher massiver Perlen können massive Perlen aus mindestens einem Polymethacrylat mit eingeschlossenen, Treibmittel enthaltenden Mikrokapseln erfindungsgemäss verwendet werden. Die Mikrokapseln lassen sich nach bekannten mechanischen, physikalischen oder chemischen Verfahren herstellen. Für die Zwecke der Erfindung besteht die Membran der Mikrokapsel aus einem transparenten Polymeren. Um die massiven Perlen zu bilden, werden die Mikrokapseln in bekannter Weise mit einem Polymethacrylat beschichtet oder in dieses einpolymerisiert, so dass jede Perle eine oder mehrere Mikrokapseln enthält.

Es wird ein Treibmittel verwendet, das das Aufblähen der massiven Perlen bei einer Temperatur bewirkt, die niedriger als die zum Aushärten des Reaktionsharzes erforderliche Temperatur ist. Auf diese Weise wird erreicht, dass das Zellvolumen des Schaumstoffes im wesentlichen voll ausgebildet ist, bevor dieser in seiner endgültigen Form erhärtet.

Um das Aufblähen der Perlen in der Mischung mit dem Reaktionsharz zu bewirken, kann man die Mischung erwärmen und dadurch den Zerfall oder das Verdampfen des Treibmittels bewirken. Man kann auch statt dessen oder ausserdem das Polymermaterial der massiven Perlen vor dem Aufblähen durch Erwärmen oder Anlösen in dem Reaktionsharz erweichen, so dass das Treibmittel sich ausdehnen und die massive Perle blähen kann.

Zur Herstellung von Formkörpern kann man das erfindungsgemässe Verfahren so durchführen, dass die Mischung aus Reaktionsharz und massiven, Treibmittel enthaltenden Perlen in eine Form eingebracht wird, in der dann das Aufblähen der Perlen und schliesslich das Härten des Reaktionsharzes vorgenommen werden. Man erhält so Formkörper mit einer glatten porenfreien Oberfläche.

Plattenförmige oder auch andersartig geformte Formkörper, die einen Kern aus Schaumkunststoff aufweisen, der einseitig oder beidseitig mit einer Schicht aus einem transparenten Kunststoff verbunden ist, können mit Vorteil nach dem erfindungsgemässen Verfahren hergestellt werden, indem man die Mischung aus Reaktionsharz und massiven, Treibmittel enthaltenden Perlen unmittelbar in eine Form einbringt, die mindestens an ihrer einen Innenseite einen mit dem Schaumkunststoffkern zu verbindenden schichtförmigen Körper aus transparentem Kunststoff aufweist oder daraus besteht. Um die feste Verbindung des fertigen Schaumkunststoffkernes mit der Aussenschicht zu gewährleisten, die aus dem gleichen Reaktionsharz wie das Reaktionsharz der Mischung oder aus einem anderen Kunststoff bestehen kann, wird der Mischung aus Reaktionsharz und massiven, Treibmittel enthaltenden Perlen ein Haftvermittler zugesetzt, oder es werden die Innenflächen der mit dem Schaumkunststoffkern zu verbindenden Kunststoffkörper vor dem Einbringen der Mischung aus Reaktionsharz und massiven, Treibmittel enthaltenden Perlen mit einer Schicht aus anpolymerisiertem oder geliertem Reaktionsharz versehen, welche dann gleichzeitig mit dem Reaktionsharz der Mischung auspolymerisiert wird. Diese Schichten können auch selbst die porenfreien Deckschichten bilden.

Bei dem erfindungsgemässen Verfahren werden vorzugsweise 1) 5–50 Gewichtsteile Reaktionsharz, nämlich ein Methacrylsäureester oder ein Polyester, das die zum Aushärten erforderlichen Komponenten enthält, 2) 95–50 Gewichtsteile massive Perlen bestehend aus einem Gemisch von mindestens einem Polymethacrylat und Treibmittel und/oder 3) 95–50 Gewichtsteile massive Perlen aus mindestens einem Polymethacrylat mit eingeschlossenen, Treibmittel enthaltenden Mikrokapseln auf 100 Gewichtsteile der Gesamtmischung eingesetzt, wobei ein Treibmittel verwendet wird, welches das Aufblähen der massiven Perlen bei einer Temperatur bewirkt, die niedriger als die zum Aushärten des Reaktionsharzes erforderliche Temperatur ist und die Perlen eine Korngrösse von etwa 0,5–8 mm haben.

Bei jeder Ausführungsform des erfindungsgemässen Verfahrens lassen sich der Gehalt der massiven Perlen an Treibmittel, die Grösse der Perlen und die Anteile der Mischung mit dem Reaktionsharz so wählen, dass Anzahl, Grösse, Form und Dichte der Bläschen (Zellen) exakt gesteuert und bestimmt werden, so dass unter anderem auch dafür gesorgt werden kann, dass die gebildeten Zellen mit grösseren Flächen aneinanderliegen, wodurch ein Schaumkunststoff hoher Lichtdurchlässigkeit erhalten wird.

Derartiger Schaumkunststoff hoher Lichtdurchlässigkeit lässt sich besonders günstig für insbesondere beidseitig beschichtete Platten verwenden, die im wesentlichen undurchsichtig aber sehr lichtdurchlässig sein sollen.

Durch die Menge des Reaktionsharzes zwischen den aufgeblähten Perlen lassen sich die mechanischen Festigkeitswerte des Schaumkunststoffes und von beschichteten Schaumkunststoffplatten regeln.

In einer ersten vorteilhaften Ausführungsform des erfindungsgemässen Verfahrens werden Perlen aus Polymethacrylat verwendet, die dadurch hergestellt sind, dass Treibmittel (z.B. Stickstoff, Kohlendioxid, Methacrylchlorid, Pentan) enthaltender Methacrylsäureester nach bekannten Perlpolymerisationsverfahren derart polymerisiert wird, dass sich das Treibmittel nicht ausdehnen kann. Es entstehen hierdurch massive, bei Raumtemperatur ungeschäumte Perlen aus Polymethacrylat. Diese Perlen werden gemäss dem erfindungsgemässen Verfahren in einen monomeren Methacrylsäureester eingemischt. Die Perlen werden durch Erwärmen und/oder Anlösen im monomeren Methacrylsäureester gallertartig. Danach wird die Mischung soweit erwärmt, dass das Treibmittel sich weiter ausdehnt und die Perlen aufbläht. Je nach der gewählten Treibmittelmenge und dem Gewichtsverhältnis von Perlen und Methacrylsäureester als auch je nach der Grösse der Perlen entsteht ein in der Bläschenform und Bläschengrösse genau bestimmbarer Schaum. Wird nunmehr der zwischen den Perlen befindliche Methacrylsäureester durch stärkeres Erwärmen polymerisiert, so hat diese Polymerisation keinen Einfluss auf die in den aufgeblähten Perlen enthaltenen Bläschen (Zellen), da diese Bläschen schon vor der Polymerisation des Methacrylsäureesters von polymerisiertem Material umgeben sind. Wenn die Mischung von Perlen und monomerem Methacrylsäureester in eine Form eingefüllt wurde, lässt sich die Blasengrösse auch durch die Füllmenge der Form steuern, da sich die Bläschen nur soweit ausdehnen können, bis sie insgesamt die Form ausfüllen.

Die massiven Perlen sind während des Blähvorgangs beim erfindungsgemässen Verfahren in jedem Fall von mindestens einer dünnen Schicht des Reaktionsharzes umhüllt, welche noch nicht polymerisiert und daher fliessfähig ist. Beim Blähvorgang können sich also die massiven Perlen gegeneinander verschieben, um innere Spannungen in der Masse auszugleichen, so dass der Schaumkunststoff eine glatte ebene freie Oberfläche ohne Verwerfungen ausbildet, die auch nach dem Erhärten des Reaktionsharzes erhalten bleibt bzw. bei einem in einer Form stattfindenden Blähvorgang der Innendruck der Masse überall gleich ist, so dass auch nach dem Erhärten keine Spannungen im fertigen Schaumkunststoff auftreten können.

Damit die Polymerisation des Methacrylsäureesters nicht eintritt, bevor das Treibmittel den Blähvorgang zu Ende geführt hat, ist es wichtig, dass die das Treibmittel anregende Temperatur unterhalb der Temperatur liegt, bei der der Methacrylsäureester polymerisiert. Vor dem Aufblähen der Perlen können diese nicht nur durch Anlösen im Methacrylsäureester plastisch werden, sondern auch zusätzlich oder statt dessen durch ein Erwärmen auf eine Temperatur, die unterhalb der Temperatur liegt, bei der das Treibmittel sich zersetzt oder einen die Blähung bewirkenden Dampfdruck entwickelt.

In einer zweiten vorteilhaften Ausführungsform des erfindungsgemässen Verfahrens wird ein Schaumkunststoff aus Acrylglas in einer bestimmten Grösse und Form dadurch hergestellt, dass eine Mischung aus Methacrylsäureester und massiven, Treibmittel enthaltenden Perlen in eine Form oder zwischen zwei Platten gegossen wird und danach die Perlen durch Temperaturerhöhung zum Blähen gebracht werden. Anschliessend wird der Methacrylsäureester durch eine weitere Temperaturerhöhung polymerisiert. Dabei kann man dafür sorgen, dass die Perlen während sie sich aufblähen so nah aneinanderdrükken, dass sie grossflächig aneinanderliegen und den grössten Teil des Methacrylsäureesters verdrängen. Hierbei liegen auch die gebildeten Bläschen grossflächig aneinander an, so dass eine hohe Lichtdurchlässigkeit erzielt wird.

Auf die Innenfläche der Form bzw. auf eine der beiden Glas- oder Acrylglasplatten kann eine Schicht aus einem anpolymerisierten und/oder gelierten Acrylsäureester aufgetragen sein. Auf diese Schicht wird dann die Mischung aus Treibmittel enthaltenden Perlen und Reaktionsharz aufgebracht, und die Perlen werden aufgebläht. Dann wird der Harzanteil der Mischung zusammen mit der Schicht aus anpolymerisiertem und/oder geliertem Methacrylsäureester auspolymerisiert.

Eine besonders genaue Regelung von Grösse, Form, Dichte und Anzahl der Bläschen wird dadurch erreicht, dass man massive Perlen aus einem transparenten Polymeren verwendet, die Treibmittel enthaltende Mikrokapseln enthalten, die vorzugsweise in das Polymere einpolymerisiert sind. Diese massiven Perlen werden dann in der Mischung mit dem Reaktionsharz durch Quellen und/oder Erwärmen erweicht, wodurch die Mikrokapsel gesprengt wird und somit das Treibmittel frei wird und die Perle grosszellig bläht. Anschliessend wird durch stärkere Temperaturerhöhung das Reaktionsharz ausgehärtet.

Die Mikrokapselmembran besteht aus einem transparenten Polymeren und sollte beim Quellen oder Erwärmen der Perle durch den Druck des Treibmittels reissen oder platzen, oder sich so weit dehnen, dass die gewünschte Bläschengrösse entsteht.

Während es für eine hohe Lichtdurchlässigkeit vorteilhaft ist, dass die Bläschen so nah aneinanderrücken, dass sie grossflächig aneinanderliegen und damit eine von der Kugelform erheblich abweichende Form annehmen, kann andererseits die Mischung auch so hergestellt werden, dass die Bläschen eine kugelige Form behalten, um andere Eigenschaften der Platte gezielt zu erreichen.

Die massiven Perlen und das Reaktionsharz können jeweils farblos oder gleich oder unterschiedlich gefärbt sein; es kann auch einer der Bestandteile eine Färbung aufweisen und der andere ungefärbt und undurchsichtig bleiben, so dass die verschiedensten Effekte, ästhetischen Gestaltungen und technischen Wirkungen erreichbar sind. Die Mischung oder eine ihrer Komponenten können auch zusätzliche Bestandteile, wie Füllstoffe, zur Modifizierung der optischen, elektrischen, chemischen, physikalischen und mechanischen Eigenschaften des Schaumkunststoffs enthalten.

Das erfindungsgemässe Verfahren ist ferner besonders vorteilhaft zur Herstellung von Mehrschichtenplatten verwendbar, bei denen mindestens eine Schaumkunststoffschicht zwischen zwei vorzugsweise transparenten Platten eingeschlossen ist, mit denen sie fest verbunden ist, wobei die Schaumkunststoffschicht und die Platten gleiche oder verschiedene Zusätze zur Veränderung der optischen, physikalischen, chemischen und mechanischen Eigenschaften enthalten können.

Die Erfindung wird weiter erläutert durch die folgenden Beispiele, welche Wege zur Ausführung der Erfindung angeben.

Beispiel 1

Ein Gemisch aus 50 Gewichtsteilen Polymethylmethacrylat (PMMA) Perlen mit einer Korngrösse von 3–4 mm (Zusammensetzung: 50 Gewichtsteile PMMA, 10 Gewichtsteile Poly-n-butylmethacrylat, 40 Gewichtsteile Trichlorfluormethan (Frigen® S 11 der Farbwerke Hoechst AG) als einpolymerisiertes Treibmittel) und 50 Gewichtsteilen Methacrylat-Reaktionsharz (Zusammensetzung: 80 Gewichtsteile Methylmethacrylat (MMA), 20 Gewichtsteile PMMA mit 0,3 Gewichtsteilen tert.Butylperbenzoat als Initiator) wird in eine Form aus zwei Glasscheiben, die durch Rundschnur in einem Abstand von 20 mm voneinander gehalten sind, so hoch aufgegossen, dass die Füllhöhe in der waagrecht liegenden Form ca. 5 mm beträgt. Im Verlauf von 30 Minuten werden die treibmittelhaltigen massiven Perlen bei Raumtemperatur angequollen. Dann wird die Temperatur im Gemisch durch Erwärmen auf ca. 60–70 °C gebracht.

Nach ca. 30 Minuten sind die Perlen im Gemisch so weit aufgeschäumt, dass die Form vollständig gefüllt ist. Durch weiteres Erwärmen auf 80–90 °C wird das MMA-Harz zwischen den geschäumten Perlen im Verlauf von 3–4 Stunden auspolymerisiert.

Die so hergestellte Schaumacrylplatte wird im Verlauf von ca. 2 Stunden auf ca. 30 °C abgekühlt und dann aus der Glasform entnommen.

Die 20 mm dicke Schaumacrylplatte wies eine glatte porenfreie Oberfläche und ein inneres Gefüge aus mehreckigen, flächig aneinanderstossenden Zellen mit einem Durchmesser von etwa 2–5 mm auf. Sie war gut lichtdurchlässig.

Beispiel 2

Ein Gemisch aus 60 Gewichtsteilen PMMA-Perlen mit der Korngrösse 500–1000 µm (Zusammensetzung: 40 Gewichtsteile PMMA, 20 Gewichtsteile Poly-n-Butylmethacrylat, 40 Gewichtsteile Trichlorfluormethan als Treibmittel) und 40 Gewichtsteilen MMA-Reaktionsharz (Zusammensetzung: 90 Gewichtsteile MMA, 10 Gewichtsteile PMMA, 0,4 Gewichtsteile tert.Butylperbenzoat) wird in eine Glasform gefüllt, die aus zwei Glasscheiben besteht, die durch Rundschnüre auf 30 mm Abstand voneinander gehalten sind. Die waagrecht liegende Form ist mit einer Füllhöhe von ca. 6–8 mm gefüllt.

Nach 60–80 Minuten sind die PMMA-Perlen durch das MMA so weit angequollen, dass sie bereits bei Erwärmen auf 40–50 °C auf 30 mm aufschäumen und somit die Form ausfüllen. Das die Perlen umschliessende Reaktionsharz wird durch weiteres Erwärmen auf 80–90 °C während 60–90 Minuten auspolymerisiert.

Die gebildete Schaumacrylplatte wird in der Form während 60 Minuten von der Reaktionstemperatur auf 40 °C abgekühlt und anschliessend aus der Glasform entnommen. Die mehreckigen, flächig aneinanderstossenden Zellen der Schaumacrylplatte haben einen Durchmesser von etwa 3–8 mm. Die Platte ist gut lichtdurchlässig und hat eine glatte porenfreie Oberfläche.

Beispiel 3

Das in Beispiel 1 eingesetzte Gemisch wird so modifiziert, dass dem MMA-Reaktionsharz 10 Gewichtsteile eines Di- oder Trimethacrylats, z.B. 1,4-Butandioldimethacrylat, als Vernetzer zugegeben werden. Das erhaltene Gemisch wird wie in Beispiel 1 geschäumt und ausgehärtet. In der erhaltenen Schaumacrylplatte hatten die mehreckigen, flächig aneinanderstossenden Zellen einen Durchmesser von etwa 3–5 mm. Die Schaumacrylplatte hatte eine glatte porenfreie Oberfläche und war gut lichtdurchlässig. Durch die Zugabe des Vernetzers wurde das Methacrylat-Reaktionsharz zu einem Duroplasten ausgehärtet, der bessere Temperatur- und Chemikalienbeständigkeit als unvernetztes polymerisiertes Methacrylatmaterial aufweist und diese Eigenschaften auch der Schaumacrylatplatte verleiht.

Beispiel 4

Ein Gemisch aus 50 Gewichtsteilen PMMA-Perlen der Korngrösse 2–3 mm (Zusammensetzung: 70 Gewichtsteile PMMA, 20 Gewichtsteile Poly-n-butylmethacrylat, 10 Gewichtsteile Acetyltributylcitrat) mit auf übliche Weise mittig einpolymerisierten Mikrokapseln von ca. 500 µm Grösse, die flüssiges Trichlorfluormethan als Treibmittel enthielten, und 50 Gewichtsteilen MMA-Reaktionsharz (Zusammensetzung: 60 Gewichtsteile MMA, 40 Gewichtsteile PMMA, 0,4 Gewichtsteile tert.Butylperbenzoat) wird in eine Form aus zwei Glasscheiben, die durch Rundschnüre in einem Abstand von 30 mm gehalten sind, so eingefüllt, dass die Füllhöhe in der waagrecht liegenden Form 6–8 mm beträgt.

Man lässt die so gefüllte Form 1 Stunde bei Raumtemperatur stehen. Während dieser Zeit werden die Perlen vom MMA erweicht und angequollen. Dann wird das Gemisch auf 60–70 °C erwärmt, wodurch der Innendruck in der Mikrokapsel so gross wird, dass das Treibmittel die Membrane der Mikrokapsel sprengt und die erweichte Acrylperle einzellig aufbläht. Nach ca. 20 Minuten ist die Form vollständig gefüllt.

Durch weiteres Erwärmen auf 80–90 °C während 2 Stunden wird das MMA-Reaktionsharz auspolymerisiert. Dann wird im Verlauf von 2 Stunden auf 40 °C abgekühlt und schliesslich die fertige Schaumacrylplatte aus der Glasform entnommen.

Die 30 mm dicke Schaumacrylplatte ist gut lichtdurchlässig, sie weist eine glatte porenfreie Oberfläche auf. Die in ihr enthaltenen mehreckigen, flächig aneinanderstossenden Zellen haben einen Durchmesser von etwa 8 mm.

Die erfindungsgemäss hergestellten Schaumkunststoffkörper sind vielseitig verwendbar, besonders als Isolier- und Baumaterial, und können durch Zusätze dem jeweiligen Verwendungszweck noch besser angepasst werden. Besondere Vorteile für die Anwendung ergeben sich aus ihrem geringen Gewicht, ihrer leichten Bearbeitbarkeit, guter Temperatur- und chemischer Beständigkeit, Wetterfestigkeit, Alterungsbeständigkeit sowie vor allem durch die gute Lichtdurchlässigkeit und Wärmedämmung, wodurch sie als Wände für Gewächshäuser hervorragend geeignet sind. Die erwähnten Eigenschaften, sowie auch die mechanische Festigkeit, können durch die Wahl der Ausgangskomponenten sowie durch Zahl, Grösse und Art der Bläschen, welche auch von der Verfahrensführung abhängen, innerhalb weiter Grenzen gesteuert werden.

## Patentansprüche

1. Verfahren zum Herstellen eines transparenten Schaumkunststoffes, dadurch gekennzeichnet, dass in ein Reaktionsharz bestehend aus einem Methacrylsäureester oder einem Polyester, das die zum Aushärten erforderlichen Komponenten enthält,

a) massive Perlen, bestehend aus mindestens einem Polymethacrylat und Treibmittel und/oder

b) massive Perlen aus mindestens einem Polymethacrylat mit eingeschlossenen, Treibmittel enthaltenden Mikrokapseln aus transparentem Polymer eingebracht werden, wobei ein Treibmittel verwendet wird, welches das Aufblähen der massiven Perlen bei einer Temperatur bewirkt, die niedriger als die zum Aushärten des Reaktionsharzes erforderliche Temperatur ist, die Perlen durch Erwärmen aufgebläht werden und anschliessend das Reaktionsharz ausgehärtet wird.

2. Verfahren nach Anspruch 1, dadurch gekennzeichnet, dass das Polymermaterial der massiven Perlen vor dem Aufblähen durch Erwärmen oder Anlösen in dem Reaktionsharz plastifiziert wird.

3. Verfahren nach Anspruch 1 oder 2, dadurch gekennzeichnet, dass die Mischung aus Reaktionsharz und massiven, Treibmittel enthaltenden Perlen in eine Form eingebracht wird, die Perlen dann aufgebläht werden und danach das Reaktionsharz ausgehärtet wird.

4. Verfahren nach Anspruch 3, dadurch gekennzeichnet, dass die Mischung aus Reaktionsharz und massiven, Treibmittel enthaltenden Perlen, der ein Haftvermittler zugesetzt wurde, zwischen zwei transparenten Platten eingebracht wird, welche die Form oder einen Teil derselben bilden, die Perlen dann aufgebläht werden und danach das Reaktionsharz ausgehärtet wird.

5. Verfahren nach Anspruch 3, dadurch gekennzeichnet, dass die Mischung aus Reaktionsharz und massiven, Treibmittel enthaltenden Perlen in eine Form gebracht wird, deren Innenflächen mit einer Schicht aus anpolymerisiertem oder geliertem Reaktionsharz beschichtet sind, dann die Perlen aufgebläht werden und danach sowohl das Reaktionsharz als auch die anpolymerisierte oder gelierte Schicht auspolymerisiert werden.

6. Verfahren nach einem der Ansprüche 1 bis 5, dadurch gekennzeichnet, dass die Mischung in 100 Gewichtsteilen

1) 5–50 Gewichtsteile Reaktionsharz, nämlich ein Methacrylsäureester oder ein Polyester, das die zum Aushärten erforderlichen Komponenten enthält,

2) 95–50 Gewichtsteile massive Perlen bestehend aus einem Gemisch von mindestens einem Polymethacrylat und Treibmittel und/oder

3) 95–50 Gewichtsteile massive Perlen aus mindestens einem Polymethacrylat mit eingeschlossenen, Treibmittel enthaltenden Mikrokapseln enthält, wobei ein Treibmittel verwendet wird, welches das Aufblähen der massiven Perlen bei einer Temperatur bewirkt, die niedriger als die zum Aushärten des Reaktionsharzes erforderliche Temperatur ist, und die Perlen eine Korngrösse von etwa 0,5–8 mm haben.

## Claims

1. A process of producing transparent foamed plastics, characterized by introducing into a reaction resin consisting of a methacrylate or a polyester which contains the components required for curing,

a) solid beads composed of at least one polymethacrylate and a blowing agent and/or

b) solid beads composed of at least one polymethacrylate with blowing agent-containing micro-capsules of transparent polymer enclosed therein, wherein a blowing agent is used which causes expansion of the solid beads at a temperature lower than the temperature required for curing the reaction resin, expanding said beads by heating and subsequently curing the reaction resin.

2. The process of claim 1, characterized in that prior to expansion the polymer material of the solid beads is softened by heating or by partially dissolving in the reaction resin.

3. The process of claim 1 or 2, characterized in that the mixture composed of reaction resin and blowing agent containing solid beads is charged into a mold, subsequently the beads are expanded, and then the reaction resin is cured.

4. The process of claim 3, characterized in that the mixture composed of reaction resin and blowing agent containing solid beads to which mixture a coupling agent has been added, is fed between two transparent panels forming the mold or part of the same, the beads are subsequently expanded, and thereupon the reaction resin is cured.

5. The process of claim 3, characterized in that the mixture composed of reaction resin and blowing agent containing solid beads is fed into a mold, the inner surfaces of which are coated with a layer of partially polymerized or gelatinated reaction resin, the beads are subsequently expanded, and thereupon both the reaction resin and the partially polymerized or gelatinated layer are polymerized completely.

6. The process of any of claims 1 to 5, characterized in that 100 parts by weight of the mixture contain

1) 5 to 50 parts by weight of reaction resin, namely a methacrylate or a polyester, including the components required for curing,

2) 95 to 50 parts by weight of solid beads composed of a mixture of at least one polymethacrylate and blowing agent
and/or

3) 95 to 50 parts by weight of solid beads composed of at least one polymethacrylate having blowing agent containing micro-capsules included therein, wherein a blowing agent is used which causes the expansion of the solid beads at a temperature which is lower than the temperature required for curing the reaction resin, the beads having a partical size of about 0,5 to 8 mm.

**Revendications**

1. Procédé pour la préparation d'une mousse plastique transparente, caractérisé par le fait que l'on introduit dans une résine de réaction constituée d'un ester méthacrylique ou d'un polyester, qui contient des composants nécessaires au durcissement,

a) des perles pleines constituées au moins d'un polyméthacrylate et de porogène
et/ou

b) des perles pleines constituées au moins d'un polyméthacrylate avec des microcapsules incluses faites de polymère transparent contenant du porogène,
où l'on utilise un porogène qui fait gonfler les perles pleines à une température qui est inférieure à la température requise pour le durcissement de la résine de réaction, on fait gonfler les perles par chauffage et l'on fait ensuite durcir la résine de réaction.

2. Procédé selon la revendication 1, caractérisé par le fait que le matériau polymère des perles pleines est plastifié par chauffage ou par trempage dans la résine de réaction avant le gonflement.

3. Procédé selon la revendication 1 ou 2, caractérisé par le fait que le mélange de résine de réaction et de perles pleines contenant du porogène est introduit dans un moule, que les perles sont alors gonflées après quoi la résine de réaction est durcie.

4. Procédé selon la revendication 3, caractérisé par le fait que le mélange de résine de réaction et de perles pleines contenant du porogène auquel est ajouté un agent de pontage est introduit entre deux plaques transparentes qui forment le moule ou une partie de celui-ci, que les perles sont alors gonflées après quoi la résine de réaction est durcie.

5. Procédé selon la revendication 3, caractérisé par le fait que le mélange de résine de réaction et de perles pleines contenant du porogène est placé dans un moule dont les faces internes sont recouvertes d'une couche de résine de réaction en partie polymérisée ou gélifiée, que les perles sont alors gonflées après quoi aussi bien la résine de réaction que la couche en partie polymérisée ou gélifiée sont complètement polymérisées.

6. Procédé selon une des revendications 1 à 5, caractérisé par le fait que le mélange contient pour 100 parties en poids

1) 5–50 parties en poids de résine de réaction, à savoir, un ester méthacrylique ou un polyester, qui contient des composants nécessaires au durcissement,

2) 95–50 parties en poids de perles pleines constituées d'un mélange d'au moins un polyméthacrylate et de porogène
et/ou

3) 95–50 parties en poids de perles pleines constituées au moins d'un polyméthacrylate avec des microcapsules incluses contenant du porogène,
où on utilise un porogène qui provoque le gonflement des perles pleines à une température qui est inférieure à la température requise pour le durcissement de la résine de réaction, et les perles ont une dimension de grains d'environ 0,5–8 mm.